# EUROPÄISCHE PATENTSCHRIFT

(11) **EP 1 446 934 B1**
(45) Veröffentlichungstag und Bekanntmachung des Hinweises auf die Patenterteilung: **16.08.2006**
(21) Anmeldenummer: 02803742.2
(22) Anmeldetag: 07.11.2002
(51) Int. Cl.: H04L 29/06, H04L 29/12

(54) **VERFAHREN ZUM AUFBAU EINER TELEKOMMUNIKATIONSVERBINDUNG UND EIN TELEKOMMUNIKATIONSNETZ**
METHOD FOR ESTABLISHING A TELECOMMUNICATION LINK AND A TELECOMMUNICATION NETWORK
PROCEDE POUR ETABLIR UNE LIAISON DE TELECOMMUNICATION ET RESEAU DE TELECOMMUNICATION

(30) Priorität: 20.11.2001 DE 10156572; 11.12.2001 DE 10160766; 24.06.2002 DE 10228209
(43) Veröffentlichungstag der Anmeldung: 18.08.2004
(73) Patentinhaber: IP2H AG, 3013 Bern (CH)
(72) Erfinder: BERGMANN, Ansgar, F-06560 Valbonne (FR); SCHENKE, Andreas, 53225 Bonn (DE); GÖSELE, Bernd, 53227 Bonn (DE); LORANG, Martin, 66625 Nohfelden (DE); EIGLER, Karl, 53343 Wachtberg (DE); WITTHAUT, Thomas, 53227 Bonn (DE)
(74) Vertreter: Naumann, Ulrich
(86) Internationale Anmeldenummer: PCT/DE2002/004142
(87) Internationale Veröffentlichungsnummer: WO 2003/047200

(56) Entgegenhaltungen:
- US-A- 5 790 548
- KOBAYASHI K ET AL: "NETWORK ACCESS CONTROL FOR DHCP ENVIRONMENT" IEICE TRANSACTIONS ON COMMUNICATIONS, INSTITUTE OF ELECTRONICS INFORMATION AND COMM. ENG. TOKYO, JP, Bd. E81-B, Nr. 9, 1. September 1998 (1998-09-01), Seiten 1718-1723, XP000790192 ISSN: 0916-8516

## Beschreibung

Die vorliegende Erfindung betrifft ein Verfahren zum Aufbau einer Telekommunikationsverbindung zwischen einem ersten und einem zweiten Teilnehmer in einem Telekommunikationsnetz, insbesondere zwischen zwei zur Kommunikation geeigneten Geräten, wobei den Teilnehmern Adressen zuordenbar sind. Des Weiteren betrifft die vorliegende Erfindung ein Telekommunikationsnetz zum Aufbau einer Telekommunikationsverbindung zwischen einem ersten und einem zweiten Teilnehmer, insbesondere zwischen zwei zur Kommunikation geeigneten Geräten, wobei den Teilnehmern Adressen zuordenbar sind.

Aus der US-A-5 790 548 ist ein Verfahren bekannt, bei dem eine einzige Adresse zugeteilt wird. Der Teilnehmer hat dabei die Möglichkeit, zugeteilte Adressen zurückzuweisen, sollte er mehrere Adressen bekommen, wenn mehrere Vermittlungseinheiten online sind. Das Erschweren der Korrelation einer zugeteilten Adresse zu einem Teitnehmer wird durch Chiffrierung der Adresse beim Senden zum Teilnehmer erreicht.

In bekannten Telekommunikationsnetzen werden Adressen und/oder Kennungen zum Aufbau einer Telekommunikationsverbindung und zum Routing verwendet. Dabei könnte unter dem Begriff "Routing" die Funktionalität verstanden werden, Informationen von einem Netzknoten zu einem anderen Netzknoten in dem Telekommunikationsnetz erforderlichenfalls über Zwischenknoten zu übermitteln.

Bei den bekannten Telekommunikativnsnetzen werden Adressen und/oder Kennungen im Klartext übertragen. Die Adressen können Teilnehmern oder Geräten zugeordnet sein. Beispielsweise werden IP-Adressen verwendet, die teilnehmerspezifisch oder gerätespezifisch sind. Des Weiteren werden Ethemet-Adressen benutzt, die gerätespezifisch sind. Die Adressen sind beim Aufbau einer Telekommunikationsverbindung zwischen zwei Teilnehmern oder zwischen zwei zur Kommunikation geeigneten Geräten wesentlich.

Die Telekommunikationsnetze sind typischerweise zumindest teilweise in dem Sinn öffentlich, dass Netzknoten der Telekommunikationsnetze einem großen und unüberschaubaren Personenkreis zugänglich sind. Hierbei bestehen weitgehende Möglichkeiten, einzelne Netzknoten geeignet zu betreiben, mit Funktionen zu versehen, zu konfigurieren und/oder zu manipulieren.

Die üblicherweise unverschlüsselte Übertragung von Adressen und/oder Kennungen, die Teilnehmern oder Geräten zugeordnet werden können, ermöglicht eine Reihe von Angriffen auf die Sicherheit der Teilnehmer oder Benutzer oder trägt wesentlich zu solchen Angriffen bei. Hierbei sind die folgenden Angriffe denkbar:
(a) Lokalisierung: Ein Angreifer kann Datenströme überwachen und den Aufenthaltsort eines Teilnehmers oder Benutzers deduzieren. Der Angreifer kann zum Zweck der Lokalisierung an eine Adresse des Teilnehmers oder Benutzers gerichtete Nachrichten senden, die der Netzknoten des Teilnehmers oder Benutzers nach Empfang protokollgemäß automatisch beantwortet.
(b) Tracing: Nach den unter (a) beschriebenen Verfahren kann ein Angreifer die Bewegung eines Teilnehmers oder Benutzers nachverfolgen.
(c) Die dem Teilnehmer oder Benutzer zugeordneten Datenströme können als solche identifiziert und gezielt angegriffen werden, z. B. zum Zweck der Umleitung, des Löschens, des Verfälschens oder des Abhörens.
(d) An den Teilnehmer oder Benutzer gerichtete gefälschte Nachrichten können erzeugt werden.

Bisher verwendete und/oder bekannte Sicherheits-Verfahren sind geeignet, die Nutzdaten des Benutzers zu schützen. Hierbei finden Methoden der Verschlüsselung, des Integritätsschutzes und/oder der Authentifikation ihre Anwendung. Dabei bleibt jedoch die Adress- und/oder Kennungsinformation unverschlüsselt. Unter Umständen werden die Adressen und/oder Kennungen zwar authentifiziert und ihre Integrität geschützt. Dies kann allerdings nur von den Endpunkten der Telekommunikationsverbindung geprüft werden, da hierzu eine sogenannte "Security Association" ausgetauscht werden muss.

Im Ergebnis bleiben jedoch die unter (a) und (b) beschriebenen Angriffe weiter möglich und werden die unter (c) und (d) beschriebenen Angriffe erleichtert.

Zur Verdeutlichung könnte das folgende Angriffsszenario vorliegen: Ein Benutzer hat einen PDA - Personal Digital Assistant - mit WLAN-Karte. Diese WLAN-Karte hat eine feste Ethernet-Adresse, welche protokollmäßig automatisch wiederholt im Klartext ausgesendet wird. Ebenso kann mit geeigneten Nachrichten der PDA dazu veranlasst werden, die IP-Adresse automatisch zu senden. Damit kann ein Angreifer den Benutzer oder Teilnehmer an öffentlichen Plätzen, Flughäfen, Bahnhöfen oder dergleichen ohne großen Aufwand lokalisieren.

Zum besseren und eindeutigen Verständnis der vorliegenden Erfindung werden im Folgenden einige verwendete Begriffe erläutert:
Telekommunikationsnetz: Unter einem Telekommunikationsnetz wird hier ein System verstanden, in dem Geräte die Möglichkeit haben können, Informationen direkt, d. h. ohne die Verwendung weiterer Geräte, an andere Geräte zu übertragen. Dabei kann im System stets die gleiche Transmissionstechnologie verwendet werden oder es können verschiedene Transmissionstechnologien verwendet werden. Die verwendeten Transmissionstechnologien können z. B. Funkübertragung, Lichtwellenübertragung oder andere Übertragungen verwenden. Ob je zwei Geräte direkt miteinander kommunizieren können, kann von Faktoren abhängen, die sich mit der Zeit verändern, beispielsweise durch die Bewegung von Geräten oder durch Änderungen der Übertragungswege und/oder Übertragungseigenschaften.
Netzknoten: Die an einem Kommunikationsnetz beteiligten kommunizierenden Geräte können als Netzknoten bezeichnet werden.
Adressen: In einem Telekommunikationsnetz werden verschiedene Arten von Adressen benutzt. Dabei lassen sich die folgenden Adressarten unterscheiden:
   Lokale Adressen: Unter lokalen Adressen werden Adressen verstanden, die lokal benutzt werden, beispielsweise zwischen Netzknoten, die direkt miteinander kommunizieren können. Allgemeiner gesagt handelt es sich um Adressen, die in einem Bereich des Telekommunikationsnetzes benutzt werden, jedoch im Allgemeinen nicht in einer Ende-zu-Ende-Kommunikation, es sei denn, diese Ende-zu-Ende-Kommunikation sei ebenfalls lokal. Eine lokale Adresse wird nicht zum Routing verwendet. Typischerweise wird eine Routing-Adresse lokal auf eine lokale Adresse abgebildet. Lokale Adressen werden typischerweise in Protokollen der Schicht 2 verwendet. Beispiele lokaler Adressen sind Ethemet-Adressen. Diese werden heute üblicherweise gerätespezifisch vergeben.
   Routing-Adressen: Unter Routing-Adressen werden Adressen verstanden, die zum Routing, d. h. zum Aufbau von Ende-zu-Ende-Kommunikationspfaden in einem Telekommunikationsnetz benutzt werden, wobei typischerweise Routing-Tabellen benutzt werden, die in den Netzknoten verwaltet werden.
      Routing-Adressen werden typischerweise in Protokollen der Schicht 3 verwendet. Beispiele von Routing-Adressen sind IP-Adressen.
   Topologische Adressen: Unter topologischen Adressen werden hier Adressen verstanden, die es einem Netzknoten erlauben, zu bestimmen, ob ein Nachbarknoten besser zu einem Zielknoten liegt als der Knoten selbst. Die Bestimmung basiert auf einer Grundmenge T möglicher topologischer Adressen und einem Bewertungsverfahren, das angewandt auf Tripel (a, b, c) von möglichen topologischen Adressen bestimmt, ob a besser zu c liegt als b. Beispiele topologischer Adressen sind geographische Koordinaten, wobei a besser zu c liegt als b, wenn die Entfernung von a zu c kleiner ist als die von b zu c. Ein weiteres Beispiel topologischer Adressen sind die in der WO 97/50195 eingeführten Koordinaten mit dem dort eingeführten Bewertungsverfahren. Unter gewissen Voraussetzungen erlauben topologische Adressen das Routing ohne Routing-Tabellen.
   Identifikationsadressen: Darunter werden hier Adressen verstanden, die dazu verwendet werden, Netzknoten oder Nutzer oder Teilnehmer zu identifizieren. ldentifikationsadressen enthalten oft einen Bestandteil, der als Routing-Adresse - etwa zu einem geeigneten Server - verwendet wird.
   Öffentliche Adressen: Darunter werden hier Identifikationsadressen verstanden, die öffentlich bekannt sind. Beispiele sind Telefonnummern und DNS-Adressen (Domain Name System).

Adressen einer Adressart können zu mehreren der oben beschriebenen Arten gehören, z. B. dient eine Telefonnummer üblicherweise gleichzeitig als Identifikationsadresse, öffentliche Adresse und Routingadresse.

Basierend auf den oben beschriebenen Problemen liegt der vorliegenden Erfindung die Aufgabe zugrunde, ein Verfahren zum Aufbau einer Telekommunikationsverbindung und ein Telekommunikationsnetz der eingangs genannten Art anzugeben, wonach eine sichere Telekommunikationsverbindung zwischen Teilnehmern in dem Talekommunikatiorisrietz ermöglicht ist.

Die voranstehende Aufgabe ist sowohl durch ein Verfahren zum Aufbau einer Telekommunikationsverbindung als auch durch ein Telekommunikationsnetz mit den Merkmalen der Patentansprüche 1 bzw. 37 gelöst. Danach sind das Verfahren sowie das Telekommunikationsnetz derart ausgestaltet und weitergebildet, dass dem zweiten Teilnehmer vor dem Aufbau der Verbindung eine vorgebbare Anzahl an Adressen durch eine Vermittlungseinheit zugeteilt wird, dass der Aufbau der Verbindung durch die Vemnittlungseinheit vermittelt wird und dass der zweite Teilnehmer mindestens eine der zugeteilten Adressen beim Aufbau der Verbindung verwendet.

In erfindungsgemäßer Weise ist erkannt worden, dass durch die mögliche alternative Verwendung mehrerer Adressen die Korrelation der verwendeten Adresse zu einem Teilnehmer erschwert oder unmöglich ist. Hierzu wird dem zweiten Teilnehmer vor dem Aufbau der Verbindung eine vorgebbare Anzahl an Adressen durch eine Vermittlungseinheit zugeteilt. Der zweite Teilnehmer kann diese Adressen im Wesentlichen frei verwenden. Des Weiteren wird dann der Aufbau der Verbindung durch die Vermittlungseinheit vermittelt. Diese Vermittlungseinheit kann die Korrelation zwischen dem zweiten Teilnehmer und diesem Teilnehmer zugeteilten Adressen herstellen. Der zweite Teilnehmer verwendet im Rahmen des erfindungsgemäßen Verfahrens mindestens eine der zugeteilten Adressen beim Aufbau der Verbindung.

Dem ersten Teilnehmer ist die Korrelation zwischen den zugeteilten Adressen und dem zweiten Teilnehmer nicht bekannt. Folglich sind mit dem erfindungsgemäßen Verfahren und dem erfindungsgemäßen Telekommunikationsnetz ein Verfahren und ein Telekommunikationsnetz angegeben, wonach eine sichere Telekommunikationsverbindung zwischen Teilnehmern in dem Telekommunikationsnetz ermöglicht ist.

Im Hinblick auf ein besonders hohes Maß an Sicherheit könnten die Adressen anonymisiert sein. Dabei sind den Adressen - zumindest auf einen ersten Blick - keine Verbindungen zu dem zweiten Teilnehmer entnehmbar.

Im Konkreten könnten die Adressen durch die Vermittlungseinheit verwaltet werden. Die Vermittlungseinheit könnte die Adressen mehrerer Teilnehmer verwalten. Die Adressen könnten insbesondere Routing- und/oder lokale Adressen sein, wobei die Adressen im Konkreten IP- und/oder Ethernet-Adressen sein könnten.

Beim Aufbau der Verbindung könnte der zweite Teilnehmer mindestens ein Tupel aus Routing- und lokaler Adresse verwenden. Es ist jedoch auch die Verwendung mehrere derartiger Tupel gleichzeitig denkbar.

Die Vermittlungseinheit könnte in einfacher Weise ein Netzknoten des Telekommunikationsnetzes sein. Die Funktion der Vermittlungseinheit könnte jedoch auch auf mehrere Netzknoten des Telekommunikationsnetzes verteilt sein. Dabei könnte eine Art Arbeitsteilung unter den Netzknoten vorgegeben werden.

In der Praxis könnte ein Anbieter die Verwendung von anonymisierten Adressen anbieten, wobei der Anbieter eine vorgebbare Anzahl von Adressen verwalten könnte, die zu in einem Kommunikationsnetz verwendeten Adressarten gehören. Dabei könnte der Anbieter einen als "Teilnehmer-Register (TR)" bezeichneten Netzknoten betreiben. Dieser Netzknoten könnte Datenbank-Funktionalitäten, kryptologische Funktionen und spezifische Protokolle implementieren. Die Funktion dieses Teilnehmer-Registers könnte auf mehrere Netzknoten aufgeteilt werden. Hierdurch wäre als Vermittlungseinheit oder Teilnehmer-Register ein verteiltes System realisiert.

Teilnehmer, denen eine geeignete Anzahl an Adressen durch eine Vermittlungseinheit zugeteilt worden ist, wechseln die verwendeten Routing-Adressen und lokalen Adressen nach Verfahren, die eine Korrelation der verwendeten Routing-Adressen und lokalen Adressen oder eine Zuordnung verwendeter Routing-Adressen und lokaler Adressen zu einem Teilnehmer sehr schwierig oder unmöglich machen.

Insbesondere im Hinblick auf eine erstmalige Anwendung des Verfahrens bei einem zweiten Teilnehmer könnte der zweite Teilnehmer vor dem Aufbau der Verbindung einen Initialisierungsvorgang durchlaufen. Hierbei könnten bei dem zweiten Teilnehmer im Rahmen des Initialisierungsvorgangs die für eine Kommunikation und/oder Ausführung einer kryptologischen Funktion zwischen dem zweiten Teilnehmer und der Vermittlungseinheit erforderlichen Funktionen, Parameter, Software, Firmware und/oder Hardware eingerichtet werden. Die Funktionen, Parameter, Software, Firmware und/oder Hardware könnten in besonders einfacher Weise durch die Vermittlungseinheit eingerichtet werden. Im Rahmen des Initialisierungsvorgangs könnte dem zweiten Teilnehmer vor dem Aufbau der Verbindung mindestens eine initiale Adresse für mindestens eine Adressart durch die Vermittlungseinheit zugeteilt werden. Die Initialisierung könnte derart durchgeführt werden, dass Vertraulichkeit gewährleistet bleibt.

In besonders einfacher Weise könnte die Vermittlungseinheit die Zuteilung der Adressen zu dem zweiten Teilnehmer im Rahmen des Initialisierungsvorgangs durchführen.

Zur weiteren Vereinfachung des Verfahrens könnten mindestens Teile der Parameter, Software und/oder Firmware auf einer Hardware-Komponente installiert sein. Eine derartige Hardware-Komponente könnte mit dem zweiten Teilnehmer über eine definierbare Schnittstelle kommunizieren. In besonders praktischer Weise könnte die Hardware-Komponente eine IC-Karte, also eine Karte mit integriertem Schaltkreis, sein.

In der Praxis könnte also ein Teilnehmer, der einen Netzknoten gesichert verwenden will, diesen hletzknoten durch die Vermittlungseinheit initialisieren lassen. Hierzu könnte sich der Teilnehmer bei einem Anbieter der Vermittlungseinheit entsprechend registrieren lassen und als subskribierter Benutzer gelten. Ein entsprechend initialisierter Netzknoten könnte dann als subskribierter Netzknoten bezeichnet werden, der mit dem erfindungsgemäßen Verfahren betrieben werden kann.

Der Teilnehmer oder Netzknoten könnte im Rahmen des erfindungsgemäßen Verfahrens in aufeinanderfolgenden Zeitabschnitten jeweils eine von der Vermittlungseinheit zugeteilte Routing-Adresse und eine von der Vermittlungseinheit zugeteilte lokale Adresse verwenden. Die Vermittlungseinheit hat diese Adressen zuvor im Rahmen beispielsweise der Initialisierung zugeteilt. Dabei kann eine gesicherte Kommunikationsbeziehung zwischen Vermittlungseinheit und Teilnehmer oder Netzknoten vorliegen.

Im Hinblick auf eine sichere Funktion und ein Sparen von Speicherplatz könnte der zweite Teilnehmer die verwendete Adresse oder die verwendeten Adressen aus der Zuteilung entfemen. Verwendete Adressen sollen aus Sicherheitsgründen nur einfach oder wenige Male verwendet werden.

Im Folgenden können die vom zweiten Teilnehmer erfüllten Funktionen vorzugsweise automatisch auch durch einen oder mehrere Netzknoten, ein Modul oder mehrere Module oder eine Einrichtung des Netzknotens durchgeführt werden.

Sobald die Anzahl der noch beim zweiten Teilnehmer zur Verfügung stehenden Adressen aufgebraucht ist oder eine vorgebbare Menge unterschritten hat, könnte der zweite Teilnehmer neue Adressen von der Vermittlungseinheit anfordern. Die Anforderung könnte auch automatisch vom Netzknoten oder einem Modul oder einer Einrichtung des Netzknotens erfolgen. Die zugeteilte Menge könnte durch die Vermittlungseinheit vorgegeben werden und könnte zwischen einem vorgebbaren Höchst- und Tiefstwert zufällig variieren. Eine derartige Zuteilung der Adressen könnte aus Sicherheitsgründen im Rahmen einer gesicherten Verbindung erfolgen.

Ein Wechsel der Adressen durch den zweiten Teilnehmer könnte nach unterschiedlichen Vorgängen oder unter unterschiedlichen Bedingungen erfolgen. Beispielsweise könnte der zweite Teilnehmer die verwendete Adresse oder die verwendeten Adressen im Rahmen seiner Aktivierung wechseln. Dabei könnte der Wechsel genau dann stattfinden, wenn der Teilnehmer aktiviert wird. Der zweite Teilnehmer könnte die verwendete Adresse oder die verwendeten Adressen alternativ oder zusätzlich hierzu nach dem Ende der Verbindung wechseln. Mit anderen Worten könnte der Wechsel direkt nach der Beendigung einer Verbindung erfolgen.

Der zweite Teilnehmer könnte die verwendete Adresse oder die verwendeten Adressen auch im Rahmen des Übergangs vom verbundenen in den unverbundenen Zustand wechseln. Mit anderen Worten könnte der Wechsel während des Übergangs oder gleichzeitig mit dem Übergang vom verbundenen in den unverbundenen Zustand erfolgen. Hierbei ist auf den jeweiligen Anwendungsfall abzustellen.

Weiter alternativ könnte der zweite Teilnehmer die verwendete Adresse oder die verwendeten Adressen nach einem vorgebbaren Zeitintervall wechseln.

So lange der Teilnehmer oder Netzknoten aktiviert ist, aber nicht verbunden ist, könnte er die Benutzung einer Routing-Adresse und einer lokalen Adresse für eine vorgebbare Dauer beibehalten, die zufällig zwischen einer durch die Vermittlungseinheit vorgegebenen Mindest- und Höchstdauer variieren könnte. Grundsätzlich wird der Teilnehmer oder Netzknoten hier als verbunden bezeichnet, wenn er in einer Ende-zu-Ende-Kommunikation zu einem oder mehreren anderen Netzknoten steht und/oder als Relais für eine Ende-zu-Ende-Kommunikation fungiert.

Bei einer weiter alternativen Anwendung könnte der zweite Teilnehmer im Rahmen des Wechsels der verwendeten Adresse oder Adressen nach einem vorgebbaren Zeitintervall - vor dem Wechsel - in den unverbundenen Zustand übergehen. Erst dann könnte der Wechsel der Adresse oder Adressen stattfinden. Das vorgebbare Zeitintervall könnte zufällig in von der Vermittlungseinheit vorgegebenen Grenzen variieren. Mit anderen Worten geht der Teilnehmer oder Netzknoten dann zum unverbundenen Zustand über, wenn er länger als eine vorgebbare Dauer verbunden ist, wobei diese Dauer zufällig in von der Vermittlungseinheit vorgegebenen Grenzen variieren könnte. Erst dann könnte ein Wechsel der benutzten Routing-Adresse und lokalen Adresse stattfinden. Um eine Verbindung nicht insgesamt zu unterbrechen könnten gegebenenfalls zwei oder mehrere Adressen parallel verwendet werden, so dass auch beim Übergang in einen unverbundenen Zustand hinsichtlich einer Adresse noch eine Verbindung über eine andere Adresse aufrecht erhalten ist. Mit anderen Worten könnte der zweite Teilnehmer im Rahmen der Verbindung mehrere Adressen oder Tupel aus Adressen gleichzeitig benutzen.

Genauer gesagt könnte der Teilnehmer oder Netzknoten bei einem bevorzugten Verfahren mehrere Tupel aus zugeteilten Routing-Adressen und lokalen Adressen gleichzeitig benutzen und so den Wechsel von Adressen kaschieren. Dann ist jede Kommunikation an ein Tupel aus einer zugeteilten Routing-Adresse und einer zugeteilten lokalen Adresse gebunden. Bei diesem bevorzugten Verfahren werden Kommunikationen beendet, wenn das zugehörige Adress-Tupel zu lange benutzt wird, d. h. länger als für eine vorgebbare Dauer, wobei diese Dauer zufällig in von der Vermittlungseinheit vorgegebenen Grenzen variieren könnte. Jede neue vom Teilnehme oder Netzknoten aufgebaute Ende-zu-Ende-Kommunikation kann ein neues Adress-Tupel benutzen. Für jede zum Teilnehmer oder Netzknoten aufgebaute Ende-zu-Ende-Kommunikation kann nach einem weiter unten beschriebenen Verfahren ebenfalls ein neues Adress-Tupel benutzt werden. Dabei werden die Verbindungen höherer Schichten nicht notwendigerweise unterbrochen.

Wenn zu wenig unbenutzte Adressen beim Teilnehmer oder im Netzknoten vorhanden sind und der Teilnehmer oder Netzknoten bei der Vermittlungseinheit neue Adressen anfordert, jedoch das Übermitteln neuer Adressen von der Vermittlungseinheit an den Teilnehmer oder Netzknoten wiederholt nicht erfolgreich ist - beispielsweise weil die Vermittlungseinheit nicht erreichbar ist -, kann der Fall eintreten, dass keine zugeteilten Adressen mehr verfügbar sind. Zu wenig Adressen bedeutet beispielsweise, dass weniger als eine vorgebbare Menge an Adressen vorliegt, wobei die vorgebbare Menge zufällig zwischen einem von der Vermittlungseinheit vorgegebenen Höchst- und Tiefstwert variieren könnte. In einer solchen Situation kann der Teilnehmer oder die Vermittlungseinheit festlegen, ob in diesem Fall der Teilnehmer oder Netzknoten bis zu einer neuen Initialisierung keinen Dienst mehr anbietet oder bereits benutzte Adressen weiter verwendet werden.

Zur Kommunikation zwischen dem Teilnehmer oder Netzknoten und der Vermittlungseinheit wird jeweils eine Kommunikationsbeziehung zwischen dem Teilnehmer oder Netzknoten und der Vermittlungseinheit aufgebaut. Im Hinblick auf eine hohe Sicherheit ist es in diesem Fall von Vorteil, wenn sich der zweite Teilnehmer oder Netzknoten und die Vermittlungseinheit im Rahmen einer derartigen Kommunikationsbeziehung gegenseitig identifizieren und/oder authentifizieren. Hierbei könnten zum Identifizieren und/oder Authentifizieren kryptologische Verfahren verwendet werden. Dabei könnte ein Datenstrom sicher verschlüsselt werden, wozu beispielsweise in der Authentifikation ausgetauschte Daten verwendet werden könnten. Grundsätzlich könnten ausgetauschte Daten mit zusätzlichem Integritätsschutz versehen werden. In einer derart geschützten Kommunikationsbeziehung könnten der Teilnehmer oder Netzknoten dann neue Adressen, beispielsweise lokale und Routing-Adressen, anfordern, die dann sicher ausgetauscht werden könnten.

In einem konkreten Fall des Aufbaus einer Verbindung könnte der erste Teilnehmer zum Aufbau der Verbindung zum zweiten Teilnehmer eine öffentliche Adresse des zweiten Teilnehmers in das Telekommunikationsnetz senden. Mit dieser öffentlichen Adresse ist der zweite Teilnehmer jedoch noch nicht erreichbar, d. h. die öffentliche Adresse ist nicht als Routingadresse benutzbar.

Im nächsten Schritt könnte die Vermittlungseinheit die öffentliche Adresse in eine Routing-Adresse umsetzen. Dann könnte die Vermittlungseinheit den zweiten Teilnehmer über einen Wunsch des ersten Teilnehmers zum Aufbau der Verbindung informieren. Im Rahmen dieser Information könnte die Vermittlungseinheit des Weiteren eine Routing-Adresse und ggf. eine öffentliche Adresse des ersten Teilnehmers an den zweiten Teilnehmer senden. Mit der öffentlichen Adresse hat der zweite Teilnehmer die Möglichkeit, Informationen über den ersten Teilnehmer zu erhalten.

Falls der zweite Teilnehmer dem Wunsch des ersten Teilnehmers zum Aufbau der Verbindung zustimmt, könnte die Vermittlungseinheit - nach dieser Einwilligung des zweiten Teilnehmers - eine Routing-Adresse und ggf. eine Identifikationsadresse des zweiten Teilnehmers an den ersten Teilnehmer senden. Die gesendete Routing-Adresse und ggf. eine Identifikationsadresse des zweiten Teilnehmers könnte zwischen Vermittlungseinheit und erstem Teilnehmer und/oder zwischen Vermittlungseinheit und zweitem Teilnehmer vereinbart werden.

Der erste Teilnehmer könnte dann auf der Basis der gesendeten Routing-Adresse und ggf. Identifikationsadresse des zweiten Teilnehmers eine Verbindung zu dem zweiten Teilnehmer aufbauen. Alternativ hierzu könnte auch der zweite Teilnehmer eine Verbindung zu dem ersten Teilnehmer aufbauen. Dabei würde vorher die Vermittlungseinheit die Routing-Adresse und ggf. Identifikationsadresse des ersten Teilnehmers mit dem ersten Teilnehmer und dem zweiten Teilnehmer vereinbaren.

Im Rahmen des Verbindungsaufbaus oder im Rahmen der Verbindung könnten sich der erste und der zweite Teilnehmer authentisieren. Hierzu könnte die Vermittlungseinheit vorher Authentifikationsparameter an den ersten und/oder zweiten Teilnehmer gesendet haben.

Im Hinblick auf ein Kaschieren der Verbindung oder des Verbindungsaufbaus zwischen dem ersten und dem zweiten Teilnehmer könnten einzelne Kommunikationsschritte zwischen der Vermittlungseinheit und dem ersten und/oder zweiten Teilnehmer und/oder zwischen dem ersten und dem zweiten Teilnehmer zeitlich und/oder kausal entkoppelt erfolgen. Hierdurch ist ein Verfolgen des Verbindungsaufbaus oder der Verbindung durch unbefugte Dritte wesentlich erschwert.

In diesem Zusammenhang könnten einzelne Kommunikationsschritte zwischen der Vermittlungseinheit und dem ersten und/oder zweiten Teilnehmer und/oder zwischen dem ersten und dem zweiten Teilnehmer durch Verzögerungen, Permutierungen oder vorgetäuschte Transaktionen kaschiert werden. Im Konkreten könnten die zeitlichen und/oder kausalen Entkoppelungen und/oder die Verzögerungen, Permutierungen oder vorgetäuschten Transaktionen durch die Vermittlungseinheit und/oder durch den ersten und/oder zweiten Teilnehmer erfolgen.

Zur Vermeidung eines systematischen Erforschens von Daten oder Bewegungen des zweiten Teilnehmers könnte die Vermittlungseinheit oder der zweite Teilnehmer den ersten Teilnehmer für weitere Verbindungsaufbau-Versuche sperren, falls ein vorheriger Verbindungsaufbau-Versuch durch die Vermittlungseinheit oder den zweiten Teilnehmer bereits abgelehnt worden ist. Eine derartige Sperre könnte zeitlich begrenzt oder dauerhaft erfolgen. Grundsätzlich könnten Verbindungsaufbau-Versuche durch nicht autorisierte Teilnehmer zeitlich begrenzt oder dauerhaft gesperrt werden. Es könnte festgelegt werden, dass nur subskribierte Teilnehmer kommunizieren können.

In einer vorteilhaften Ausgestaltung eines Telekommunikationsnetzes könnten ein oder mehrere Teilnehmer Relaisfunktionen aufweisen oder als Relais arbeiten. Mit anderen Worten könnten Teile des Kommunikationsnetzes Relaisfunktionen aufweisen. Dabei könnten bei einem Anbieter oder der Vermittlungseinheit subskribierte Teilnehmer oder Netzknoten nur für solche Teilnehmer oder Netzknoten als Relais fungieren oder nur solche Teilnehmer oder Netzknoten als Relais benutzen, die die gleichen Protokolle für die Relaisfunktionalitäten verwenden. Des Weiteren könnten bei einem Anbieter oder der Vermittlungseinheit subskribierte Teilnehmer oder Netzknoten als Relais nur für solche Teilnehmer oder Netzknoten fungieren oder nur solche Teilnehmer oder Netzknoten als Relais benutzen, die beim Anbieter oder der Vermittlungseinheit oder bei anderen mit dem Anbieter oder der Vermittlungseinheit assoziierten Anbietern oder Vermittlungseinheiten subskribiert sind und sich entsprechend authentifizieren können.

Des Weiteren könnte eine vorgebbare Anzahl von Teilnehmern verschlüsselte Identitätsadressen austauschen. Besonders günstig ist es, wenn jeder subskribierte Netzknoten mit allen seinen subskribierten Nachbarn, d. h. direkt und ohne Zwischenrelais erreichbaren subskribierten Netzknoten, verschlüsselte Identitätsadressen ausgetauscht hat. Wenn nun beispielsweise ein Netzknoten A einen Nachbarn X als Relais benutzen will, sendet er eine Nachricht im Broadcast-Verfahren, die weder eine Routing-Adresse noch eine lokale Adresse, dafür eine verschlüsselte Identitätsadresse von X enthält. Diese Nachricht kann, falls eine Routing-Adresse und/oder lokale Adresse von A in ihr erforderlich ist, neu gewählte solche Adressen enthalten. Ebenso kann X mit neu gewählten Adressen unter Bezugnahme auf die Anfrage antworten.

Bei einer weiteren vorteilhaften Ausgestaltung eines Telekommunikationsnetzes könnte von der Vermittlungseinheit aus mindestens ein Gateway zu mindestens einem definierbaren Teilnetz betrieben werden. Dabei könnte mindestens ein vorgebbarer Teilnehmer des Teilnetzes eine topologische Adresse verwenden.

Insgesamt ist das hier beschriebene Verfahren besonders geeignet, wenn der Anbieter oder die Vermittlungseinheit auch Gateways zu Teilnetzen betreibt, in denen jeder subskribierte Teilnehmer oder Netzknoten vom Gateway über eine Kette subskribierter Teilnehmer oder Netzknoten erreichbar ist, wobei in der Kette topologische Adressen von den subskribierten Teilnehmern oder Netzknoten verwendet werden könnten. In diesem Fall könnte das Gateway mit der Vermittlungseinheit sicher kommunizieren, und beide könnten sicher mit einem von dem Anbieter betriebenen Location Register kommunizieren. In einem Sonderfall könnten einige dieser drei Netzknoten gleich sein.

Beim Aufbau einer Kommunikationsbeziehung zu einem in einem solchen Teilnetz befindlichen subskribierten Teilnehmer oder Netzknoten kann der Kommunikationsaufbau bis zum Gateway nach dem oben beschriebenen Verfahren erfolgen. Die topologische Adressinformation wird im Teilnetz verwendet. Zur Erschwerung von Lokalisierungen basierend auf der topologischen Adressinformation könnten folgende Verfahren verwendet werden:
(A) Der mindestens eine vorgebbare Teilnehmer oder Netzknoten des Teilnetzes, der topologische Adressen verwendet, könnte mindestens einen Koordinatenwechsel durchführen. Auch andere Teilnehmer oder Netzknoten könnten derartige Koordinatenwechsel durchführen. Dabei könnten Koordinaten redundant verfügbar sein. Zum Routing könnte dann nur eine Auswahl der Koordinaten verwendet werden.
(B) Für eine besonders hohe Sicherheitsstufe könnte die Adressbewertung zur Koordiantenauswahl stets im Gateway erfolgen.
(C) Eine hohe Sicherheit könnte sich auch ergeben, wenn eine für einen Kommunikationsaufbau zu verwendende oder zu verwertende topologische Adresse oder Adressinformation stets verschlüsselt übertragen wird. Dabei könnten mindestens ein vorgebbarer Teilnehmer oder Netzknoten einen Sicherheitsmodul aufweisen, der die Entschlüsselung der empfangenen topologischen Adresse oder Adressinformation, die Weiterverarbeitung zur Auswahl des nächsten Relais und die Verschlüsselung der weiterzureichenden topologischen Adressinformation durchführt. Dabei ist besonders wesentlich, dass der Sicherheitsmodul zur Entschlüsselung der verschlüsselten topologischen Adresse geeignet ist. Der Sicherheitsmodul könnte in geeigneter Weise vor Eingriffen geschützt werden, so dass die für einen Kommunikationsaufbau zu verwertende topologische Adressinformation nicht im Klartext ausgelesen werden kann. Als Sicherheitsmodul könnte in besonders praktischer Weise ein Chip verwendet werden. Sämtliche in der hier vorliegenden Beschreibung dargestellten Funktionen eines oder mehrerer Teilnehmer könnten in besonders zuverlässiger Weise durch mindestens einen Netzknoten, mindestens ein Modul oder mindestens eine Einrichtung eines oder mehrerer Netzknoten vorzugsweise automatisch ausgeführt werden.

Bei der Anwendung des hier beschriebenen Verfahrens in Kommunikationsnetzen muss berücksichtigt werden, dass zu häufige Wechsel der Routing-Adresse zu einer signifikanten Netzbelastung führen können, wenn beispielsweise Link State Protokolle - beispielsweise OSPF - verwendet werden. In besonders günstiger Weise ist das Verfahren anwendbar, wenn der Anbieter auch Gateways zu Teilnetzen betreibt, in denen jeder subskribierte Netzknoten oder Teilnehmer vom Gateway über eine Kette subskribierter Teilnehmer oder Netzknoten erreichbar ist. Dies können beispielsweise WLAN-Teilnetze sein, die grundsätzlich besonders angreifbar sind.

Bei den erfindungsgemäßen Verfahren können kryptologlische Funktionen und Verfahren wie beispielsweise Verfahren zur Verschlüsselung, zur Authentifikation und zum Integritätsschutz verwendet werden. Spezielle solche Funktionen und Verfahren werden hier nicht beschrieben, vielmehr könne alle derartigen geeigneten Funktionen und Verfahren im Rahmen der Erfindung angewandt werden.

Des Weiteren werden im Rahmen der vorliegenden Erfindung Protokolle für die Kommunikation zwischen Netzknoten erwähnt. Die Protokolle werden hier nicht detailliert beschrieben. Vielmehr können im Rahmen der vorliegenden Erfindung beliebige Protokolle verwendet werden, die die notwendigen und geeigneten Funktionalitäten bereitstellen.

Im Rahmen der vorliegenden Erfindung ist grundsätzlich vom Aufbau einer Telekommunikationsverbindung zwischen einem ersten und einem zweiten Teilnehmer die Rede. Die Erfindung dient insbesondere dem Schutz der Vertraulichkeit von Adressen und/oder Kennungen. Diesbezüglich könnte ein wie hier beschriebener Aufbau einer Telekommunikationsverbindung auch im Sinne eines Aufbaus während einer bereits bestehenden Telekommunikationsverbindung verstanden werden. Dieser Aufbau wäre dann ein der Absicherung der bestehenden Telekommunikationsverbindung dienender Aufbau einer Telekommunikationsverbindung mit erhöhter Sicherheit bzw. erhöhtem Schutz der Vertraulichkeit von Adressen und/oder Kennungen. In diesem Sinn ist mit dem erfindungsgemäßen Aufbau einer Telekommunikationsverbindung nicht zwingend der grundsätzliche Beginn einer Telekommunikationsverbindung gemeint, sondern auch eine Art Ergänzung einer bestehenden Telekommunikationsverbindung durch eine Telekommunikationsverbindung mit erhöhter Sicherheit.

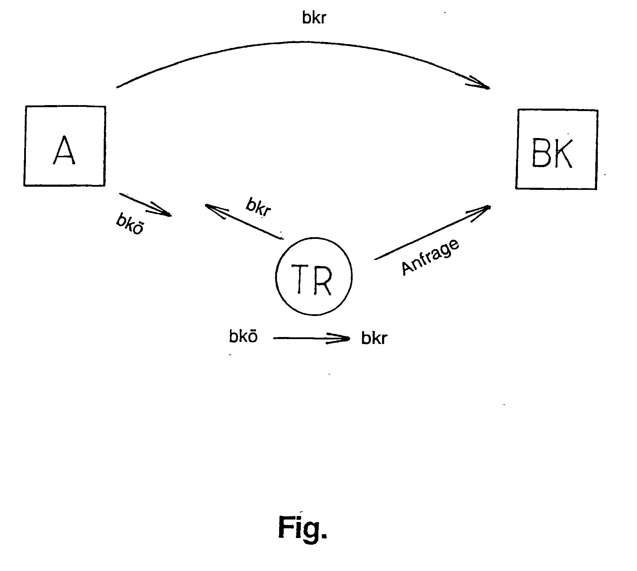

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
- Fig.: in einer schematischen Darstellung ein Ausführungsbeispiel des erfindungsgemäßen Verfahrens zum Aufbau einer Telekommunikationsverbindung.

Die einzige Fig. zeigt in einer schematischen Darstellung ein Ausführungsbeispiel des erfindungsgemäßen Verfahrens zum Aufbau einer Telekommunikationsverbindung zwischen einem ersten Teilnehmer A und einem zweiten Teilnehmer BK - Benutzerknoten - in einem Telekommunikationsnetz. Den Teilnehmern A, BK sind Adressen zuordenbar. Im Hinblick auf eine sichere Telekommunikationsverbindung zwischen den Teilnehmern A und BK in dem Telekommunikationsnetz werden dem zweiten Teilnehmer BK vor dem Aufbau der Verbindung eine vorgebbare Anzahl an Adressen durch eine Vermittlungseinheit TR - Teilnehrnerregister - zugeteilt. Der Aufbau der Verbindung wird durch die Vermittlungseinheit TR vermittelt. Der zweite Teilnehmer BK verwendet mindestens eine der durch die Vermittlungseinheit TR zugeteilten Adressen beim Aufbau der Verbindung.

Zunächst schickt der Netzknoten oder Teilnehmer A eine öffentliche Adresse bkö von BK in das Telekommunikationsnetz. Bei dem hier beschriebenen Verfahren ist vorausgesetzt, dass der zu bkö gehörige Nameserver - Netzknoten -, der bkö in eine Routing-Adresse umsetzt, das Teilnehmerregister TR bzw. die Vermittlungseinheit von BK ist.

Im weiteren Verfahren baut TR eine sichere Kommunikationsbeziehung zu BK auf, überträgt den Wunsch von A hinsichtlich des Verbindungsaufbaus gegebenenfalls zusammen mit weiteren Informationen über A - z. B. die Routing-Adresse und, falls verfügbar, die öffentliche Adresse von A -, holt die Einwilligung von BK ein, eine Routing-Adresse von BK an A zu senden, und vereinbart eine zu benutzende Routing-Adresse bkr mit BK. Falls auch A wie BK subskribiert ist, sendet TR Authentifikationsparameter an BK. Dann sendet TR bkr an A. Falls auch A subskribiert ist, benutzt TR dazu eine gesicherte Kommunikationsbeziehung und überträgt an A Authentifikationsparamter, die zu den an BK gesendeten Authentifikationsparamtem passen. A kann dann eine Kommunikation zu BK aufbauen und beide können sich gegebenenfalls authentisieren. Dieses Verfahren ist nur sicher, wenn A subskribiert ist. TR oder BK können es ablehnen, die Routing-Information oder Routing-Adresse zu senden.

Alternativ hierzu könnte auch BK auf den Wunsch von A hin, eine Verbindung aufzubauen, die Verbindung zu A aufbauen. Hierbei können sich BK und A gegebenenfalls authentisieren. Auch hier baut zunächst TR eine sichere Kommunikationsbeziehung zu BK auf und überträgt den Wunsch von A, eine Verbindung aufzubauen, gegebenenfalls mit weiteren Informationen über A - beispielsweise die Routing-Adresse und, falls verfügbar, die öffentliche Adresse von A. Falls auch A wie BK subskribiert ist, sendet TR Authentifikationsparameter an BK. Dieses alternative Verfahren ist ebenfalls nur sicher, wenn A subskribiert ist. TR kann es ablehnen, die Routing-Information zu senden.

Um zu verhindern, dass ein Angreifer systematisch Anfragen an das TR stellt, um die nachfolgenden Datenströme an BK zu korrelieren, kann das TR nach der ersten abgewiesenen Anfrage den anfragenden Netzknoten vorübergehend oder auf Dauer für weitere Anfragen sperren und/oder alle Anfragen von nicht speziell autorisierten und subskribierten Netzknoten bezüglich BK vorübergehend oder auf Dauer für weitere Anfragen sperren.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich gewählte Ausführungsbeispiel lediglich zur Erörterung der erfindungsgemäßen Lehre dient, diese jedoch nicht auf dieses Ausführungsbeispiel einschränkt.

## Patentansprüche

1. Verfahren zum Aufbau einer Telekommunikationsverbindung zwischen einem ersten und einem zweiten Teilnehmer (A, BK) in einem Telekommunikationsnetz, insbesondere zwischen zwei zur Kommunikation geeigneten Geräten, wobei den Teilnehmern (A, BK) Adressen zuordenbar sind,
**dadurch gekennzeichnet,**
**dass** dem zweiten Teilnehmer (BK) vor dem Aufbau der Verbindung eine vorgebbare Anzahl an Adressen durch eine Vermittlungseinheit (TR) zugeteilt wird,
**dass** der Aufbau der Verbindung durch die Vermittlungseinheit (TR) vermittelt wird und
**dass** der zweite Teilnehmer (BK) mindestens eine der zugeteilten Adressen beim Aufbau der Verbindung verwendet.

2. Verfahren nach Anspruch 1, **dadurch gekennzeichnet, dass** die Adressen anonymisiert sind und/oder dass die Adressen durch die Vermittlungseinheit (TR) verwaltet werden.

3. Verfahren nach Anspruch 1 oder 2, **dadurch gekennzeichnet, dass** die Adressen Routing- oder lokale Adressen sind oder dass die Adressen IP- oder Ethemet-Adressen sind.

4. Verfahren nach einem der Ansprüche 1 bis 3, **dadurch gekennzeichnet, dass** der zweite Teilnehmer (BK) mindestens ein Tupel aus Routing- und lokaler Adresse verwendet.

5. Verfahren nach einem der Ansprüche 1 bis 4, **dadurch gekennzeichnet, dass** als Vermittlungseinheit (TR) ein Netzknoten des Telekommunikationsnetzes verwendet wird oder dass die Funktion der Vermittlungseinheit (TR) auf mehrere Netzknoten des Telekommunikationsnetzes verteilt wird.

6. Verfahren nach einem der Ansprüche 1 bis 5, **dadurch gekennzeichnet, dass** der zweite Teilnehmer (BK) vor dem Aufbau der Verbindung einen Initialisierungsvorgang durchläuft.

7. Verfahren nach Anspruch 6, **dadurch gekennzeichnet, dass** bei dem zweiten Teilnehmer (BK) im Rahmen des Initialisierungsvorgangs die für eine Kommunikation oder Ausführung einer kryptologischen Funktion zwischen dem zweiten Teilnehmer (BK) und der Vermittlurigseinheit (TR) erforderlichen Funktionen, Parameter, Software, Firmware oder Hardware eingerichtet werden.

8. Verfahren nach Anspruch 7, **dadurch gekennzeichnet, dass** die Funktionen, Parameter, Software, Firmware oder Hardware durch die Vermittlungseinheit (TR) eingerichtet werden.

9. Verfahren nach einem der Ansprüche 6 bis 8, **dadurch gekennzeichnet, dass** dem zweiten Teilnehmer (BK) im Rahmen des Initialisierungsvorgangs vor dem Aufbau der Verbindung mindestens eine initiale Adresse für mindestens eine Adressart durch die Vermittlungseinheit (TR) zugeteilt wird und/oder dass die Vermittlungseinheit (TR) die Zuteilung der Adressen zu dem zweiten Teilnehmer (BK) im Rahmen des Initialisierungsvorgangs durchführt.

10. Verfahren nach einem der Ansprüche 7 bis 9, **dadurch gekennzeichnet, dass** mindestens Teile der Parameter, Software oder Firmware auf einer Hardware-Komponente installiert werden.

11. Verfahren nach Anspruch 9, **dadurch gekennzeichnet, dass** die Hardware-Komponente mit dem zweiten Teilnehmer (BK) über eine definierbare Schnittstelle kommuniziert oder als Hardware-Komponente eine IC-Karte verwendet wird.

12. Verfahren nach einem der Ansprüche 1 bis 10, **dadurch gekennzeichnet, dass** der zweite Teilnehmer (BK) die verwendete Adresse oder die verwendeten Adressen aus der Zuteilung entfernt oder dass der zweite Teilnehmer (BK) neue Adressen von der Vermittlungseinheit (TR) anfordert, sobald die Anzahl der noch beim zweiten Teilnehmer (BK) zur Verfügung stehenden Adressen aufgebraucht ist oder eine vorgebbare Menge unterschritten hat.

13. Verfahren nach Anspruch 12, **dadurch gekennzeichnet, dass** die Menge durch die Vermittlungseinheit (TR) vorgegeben wird.

14. Verfahren nach einem der Ansprüche 1 bis 13, **dadurch gekennzeichnet, dass** die Zuteilung der Adressen im Rahmen einer gesicherten Verbindung erfolgt oder dass der zweite Teilnehmer (BK) die verwendete Adresse oder die verwendeten Adressen im Rahmen seiner Aktivierung wechselt.

15. Verfahren nach einem der Ansprüche 1 bis 14, **dadurch gekennzeichnet, dass** der zweite Teilnehmer (BK) die verwendete Adresse oder die verwendeten Adressen nach dem Ende der Verbindung wechselt oder dass der zweite Teilnehmer (BK) die verwendete Adresse oder die verwendeten Adressen im Rahmen des Übergangs vom verbundenen in den unverbundenen Zustand wechselt oder dass der zweite Teilnehmer (BK) die verwendete Adresse oder die verwendeten Adressen nach einem vorgebbaren Zeitintervall wechselt.

16. Verfahren nach Anspruch 14 oder 15, **dadurch gekennzeichnet, dass** der zweite Teilnehmer (BK) Im Rahmen des Wechsels der verwendeten Adresse oder Adressen nach einem vorgebbaren Zeitintervall - vor dem Wechsel - in den unverbundenen Zustand übergeht.

17. Verfahren nach einem der Ansprüche 1 bis 16, **dadurch gekennzeichnet, dass** der zweite Teilnehmer (BK) im Rahmen der Verbindung mehrere Adressen oder Tupel aus Adressen gleichzeitig benutzt oder dass sich der zweite Teilnehmer (BK) und die Vermittlungseinheit (TR) im Rahmen einer Kommunikationsbeziehung gegenseitig identifizieren oder authentifizieren.

18. Verfahren nach einem der Ansprüche 1 bis 17, **dadurch gekennzeichnet, dass** der erste Teilnehmer (A) zum Aufbau der Verbindung zum zweiten Teilnehmer (BK) eine öffentliche Adresse des zweiten Teilnehmers (BK) in das Telekommunikationsnetz sendet.

19. Verfahren nach Anspruch 18, **dadurch gekennzeichnet, dass** die Vermittlungseinheit (TR) die öffentliche Adresse in eine Routing-Adresse umsetzt.

20. Verfahren nach einem der Ansprüche 1 bis 19, **dadurch gekennzeichnet, dass** die Vermittlungseinheit (TR) den zweiten Teilnehmer (BK) über einen Wunsch des ersten Teilnehmers (A) zum Aufbau der Verbindung informiert.

21. Verfahren nach einem der Ansprüche 1 bis 20, **dadurch gekennzeichnet, dass** die Vermittlungseinheit (TR) eine Routing-Adresse oder eine öffentliche Adresse des ersten Teilnehmers (A) an den zweiten Teilnehmer (BK) sendet oder dass - nach Einwilligung des zweiten Teilnehmers (BK) - die Vermittlungseinheit (TR) eine Routing-Adresse des zweiten Teilnehmers (BK) an den ersten Teilnehmer (A) sendet.

22. Verfahren nach Anspruch 21, **dadurch gekennzeichnet, dass** die gesendete Routing-Adresse des zweiten Teilnehmers (BK) mit der Vermittlungseinheit (TR) vereinbart wird.

23. Verfahren nach Anspruch 21 oder 22, **dadurch gekennzeichnet, dass** der erste Teilnehmer (A) auf der Basis der gesendeten Routing-Adresse des zweiten Teilnehmers (BK) eine Verbindung zu dem zweiten Teilnehmer (BK) aufbaut.

24. Verfahren nach einem der Ansprüche 1 bis 23, **dadurch gekennzeichnet, dass** der zweite Teilnehmer (BK) eine Verbindung zu dem ersten Teilnehmer (A) aufbaut und/oder dass sich der erste und der zweite Teilnehmer (A, BK) authentisieren.

25. Verfahren nach einem der Ansprüche 1 bis 24, **dadurch gekennzeichnet, dass** die Vermittlungseinheit (TR) Authentifikationsparameter an den ersten und/oder zweiten Teilnehmer (A, BK) sendet.

26. Verfahren nach einem der Ansprüche 1 bis 25, **dadurch gekennzeichnet, dass** einzelne Kommunikationsschritte zwischen der Vermittlungseinheit (TR) und dem ersten oder zweiten Teilnehmer (A, BK) oder zwischen dem ersten und dem zweiten Teilnehmer (A, BK) zeitlich oder kausal entkoppelt erfolgen oder dass einzelne Kommunikationsschritte zwischen der Vermittlungseinheit (TR) und dem ersten oder zweiten Teilnehmer (A, BK) oder zwischen dem ersten und dem zweiten Teilnehmer (A, BK) durch Verzögerungen, Permutierungen oder vorgetäuschte Transaktionen kaschiert werden.

27. Verfahren nach Anspruch 26, **dadurch gekennzeichnet, dass** die zeitlichen oder kausalen Entkoppelungen oder die Verzögerungen, Permutierungen oder vorgetäuschten Transaktionen durch die Vermittlungseinheit (TR) oder durch den ersten oder zweiten Teilnehmer (A, BK) erfolgen.

28. Verfahren nach einem der Ansprüche 1 bis 27, **dadurch gekennzeichnet, dass** die Vermittlungseinheit (TR) oder der zweite Teilnehmer (BK) den ersten Teilnehmer
(A) für weitere Verbindungsaufbau-Versuche sperrt, falls ein vorheriger Verbindungsaufbau-Versuch durch die Vermittlungseinheit (TR) oder den zweiten Teilnehmer (BK) bereits abgelehnt worden ist.

29. Verfahren nach Anspruch 28, **dadurch gekennzeichnet, dass** die Sperre zeitlich begrenzt oder dauerhaft erfolgt.

30. Verfahren nach einem der Ansprüche 1 bis 29, **dadurch gekennzeichnet, dass** Verbindungsaufbau-Versuche durch nicht autorisierte Teilnehmer zeitlich begrenzt oder dauerhaft gesperrt werden.

31. Verfahren nach einem der Ansprüche 1 bis 30, **dadurch gekennzeichnet, dass** ein oder mehrere Teilnehmer Relaisfunktionen aufweisen oder dass eine vorgebbare Anzahl von Teilnehmern verschlüsselte Identitätsadressen austauschen.

32. Verfahren nach einem der Ansprüche 1 bis 31, **dadurch gekennzeichnet, dass** von der Vermittlungseinheit (TR) aus mindestens ein Gateway zu mindestens einem definierbaren Teilnetz betrieben wird.

33. Verfahren nach Anspruch 32, **dadurch gekennzeichnet, dass** mindestens ein vorgebbarer Teilnehmer des Teilnetzes eine topologische Adresse verwendet.

34. Verfahren nach Anspruch 33, **dadurch gekennzeichnet, dass** der mindestens eine vorgebbare Teilnehmer des Teilnetzes mindestens einen Koordinatenwechsel durchführt und/oder die topologische Adresse stets verschlüsselt übertragen wird.

35. Verfahren nach Anspruch 33 oder 34, **dadurch gekennzeichnet, dass** mindestens ein vorgebbarer Teilnehmer einen Sicherheitsmodul zur Entschlüsselung der verschlüsselten topologischen Adresse verwendet.

36. Verfahren nach einem der Ansprüche 1 bis 35, **dadurch gekennzeichnet, dass** die Funktion eines oder mehrerer Teilnehmer durch mindestens einen Netzknoten, mindestens ein Modul oder mindestens eine Einrichtung eines oder mehrerer Netzknoten ausgeführt werden.

37. Telekommunikationsnetz, insbesondere zur Anwendung des Verfahrens nach einem der Ansprüche 1 bis 36, zum Aufbau einer Telekommunikationsverbindung zwischen einem ersten und einem zweiten Teilnehmer (A, BK), insbesondere zwischen zwei zur Kommunikation geeigneten Geräten, wobei den Teilnehmern (A, BK) Adressen zuordenbar sind,
**dadurch gekennzeichnet,**
**dass** dem zweiten Teilnehmer (BK) vor dem Aufbau der Verbindung eine vorgebbare Anzahl an Adressen durch eine Vermittlungseinheit (TR) zuordenbar ist,
**dass** die Vermittlungseinheit (TR) zum Aufbau der Verbindung ausgebildet ist und
**dass** der zweite Teilnehmer (BK) zur Verwendung mindestens einer der zugeteilten Adressen beim Aufbau der Verbindung ausgebildet ist.

## Claims

1. Method for establishing a telecommunication link between a first and a second subscriber (A, BK) in a telecommunication network, in particular between two apparatus adapted for communication, wherein addresses can be associated with the subscribers (A, BK),
**characterised in**
**that** a predeterminable number of addresses are allocated to the second subscriber (BK) by a switching unit (TR) before the link is established,
**that** the establishment of the link is effected by the switching unit (TR)
and
**that** the second subscriber (BK) uses at least one of the allocated addresses when establishing the link.

2. Method according to Claim 1, **characterised in that** the addresses are anonymised and/or that the addresses are managed by the switching unit (TR).

3. Method according to Claim 1 or 2, **characterised in that** the addresses are routing or local addresses or that the addresses are IP or Ethernet addresses.

4. Method according to any one of Claims 1 to 3, **characterised in that** the second subscriber (BK) uses at least one tuple of routing and local addresses.

5. Method according to any one of Claims 1 to 4, **characterised in that** a network node of the telecommunication network is used as the switching unit (TR) or that the function of the switching unit (TR) is distributed among a plurality of network nodes of the telecommunication network.

6. Method according to any one of Claims 1 to 5, **characterised in that** the second subscriber (BK) passes through an initialisation process before the link is established.

7. Method according to Claim 6, **characterised in that** the functions, parameters, software, firmware or hardware required for communication or execution of a cryptological function between the second subscriber (BK) and the switching unit (TR) are set up at the second subscriber (BK) in connection with the initialisation process.

8. Method according to Claim 7, **characterised in that** the functions, parameters, software, firmware or hardware are set up by the switching unit (TR).

9. Method according to any one of Claims 6 to 8, **characterised in that** at least one initial address for at least one address type is allocated to the second subscriber (BK) by the switching unit (TR) in connection with the initialisation process before the link is established and/or that the switching unit (TR) performs the allocation of the addresses to the second subscriber (BK) in connection with the initialisation process.

10. Method according to any one of Claims 7 to 9, **characterised in that** at least parts of the parameters, software or firmware are installed on a hardware component.

11. Method according to Claim 9, **characterised in that** the hardware component communicates with the second subscriber (BK) via a definable interface or an IC card is used as the hardware component.

12. Method according to any one of Claims 1 to 10, **characterised in that** the second subscriber (BK) removes the used address or the used addresses from the allocation or that the second subscriber (BK) requests new addresses from the switching unit (TR) as soon as the number of addresses still available at the second subscriber (BK) have been exhausted or have fallen below a predeterminable quantity.

13. Method according to Claim 12, **characterised in that** the quantity is predetermined by the switching unit (TR).

14. Method according to any one of Claims 1 to 13, **characterised in that** the allocation of the addresses takes place in connection with a secure link or that the second subscriber (BK) changes the used address or the used addresses in connection with his activation.

15. Method according to any one of Claims 1 to 14, **characterised in that** the second subscriber (BK) changes the used address or the used addresses following the termination of the link or that the second subscriber (BK) changes the used address or the used addresses in connection with the transition from the connected to the unconnected state or that the second subscriber (BK) changes the used address or the used addresses after a predeterminable time interval.

16. Method according to Claim 14 or 15, **characterised in that** the second subscriber (BK) goes over to the unconnected state after a predeterminable time interval - before the change - in connection with the change of the used address or addresses.

17. Method according to any one of Claims 1 to 16, **characterised in that** the second subscriber (BK) uses a plurality of addresses or tuples of addresses simultaneously in connection with the link or that the second subscriber (BK) and the switching unit (TR) identify or authenticate one another in connection with a communication relationship.

18. Method according to any one of Claims 1 to 17, **characterised in that** the first subscriber (A) sends a public address of the second subscriber (BK) into the telecommunication network to establish the link with the second subscriber (BK).

19. Method according to Claim 18, **characterised in that** the switching unit (TR) converts the public address into a routing address.

20. Method according to any one of Claims 1 to 19, **characterised in that** the switching unit (TR) informs the second subscriber (BK) of a wish of the first subscriber (A) to establish the link.

21. Method according to any one of Claims 1 to 20, **characterised in that** the switching unit (TR) sends a routing address or a public address of the first subscriber (A) to the second subscriber (BK) or that - following the consent of the second subscriber (BK) - the switching unit (TR) sends a routing address of the second subscriber (BK) to the first subscriber (A).

22. Method according to Claim 21, **characterised in that** the sent routing address of the second subscriber (BK) is agreed with the switching unit (TR).

23. Method according to Claim 21 or 22, **characterised in that** the first subscriber (A) establishes a link with the second subscriber (BK) on the basis of the sent routing address of the second subscriber (BK).

24. Method according to any one of Claims 1 to 23, **characterised in that** the second subscriber (BK) establishes a link with the first subscriber (A) and/or that the first and the second subscribers (A, BK) authenticate one another.

25. Method according to any one of Claims 1 to 24, **characterised in that** the switching unit (TR) sends authentication parameters to the first and/or second subscriber(s) (A, BK).

26. Method according to any one of Claims 1 to 25, **characterised in that** individual communication steps between the switching unit (TR) and the first or second subscriber (A, BK) or between the first and the second subscriber (A, BK) take place in isolation related to time or cause or that individual communication steps between the switching unit (TR) and the first or second subscriber (A, BK) or between the first and the second subscriber (A, BK) are sandwiched between delays, permutations or spurious transactions.

27. Method according to Claim 26, **characterised in that** the time- or cause-related isolations or the delays, permutations or spurious transactions take place through the switching unit (TR) or through the first or second subscriber (A, BK).

28. Method according to any one of Claims 1 to 27, **characterised in that** the switching unit (TR) or the second subscriber (BK) bars the first subscriber (A) from further attempts to establish a link if a previous attempt to establish a link has already been rejected by the switching unit (TR) or the second subscriber (BK).

29. Method according to Claim 28, **characterised in that** the bar is limited in time or permanent.

30. Method according to any one of Claims 1 to 29, **characterised in that** attempts by unauthorised subscribers to a establish a link are barred for a limited time or permanently.

31. Method according to any one of Claims 1 to 30, **characterised in that** one or a plurality of subscriber(s) have relay functions or that a predeterminable number of subscribers exchange encoded identity addresses.

32. Method according to any one of Claims 1 to 31, **characterised in that** at least one gateway to at least one definable subnetwork is operated from the switching unit (TR).

33. Method according to Claim 32, **characterised in that** at least one predeterminable subscriber of the subnetwork uses a topological address.

34. Method according to Claim 33, **characterised in that** the at least one predeterminable subscriber of the subnetwork performs at least one coordinate change and/or the topological address in always transmitted in encoded form.

35. Method according to Claim 33 or 34, **characterised in that** at least one predeterminable subscriber uses a security module to decode the encoded topological address.

36. Method according to any one of Claims 1 to 35, **characterised in that** the function of one or a plurality of subscriber(s) is executed by at least one network node, at least one module or at least one device of one or a plurality of network node(s).

37. Telecommunication network, in particular for applying the method according to any one of Claims 1 to 36, for establishing a telecommunication link between a first and a second subscriber (A, BK), in particular between two apparatus adapted for communication, wherein addresses can be associated with the subscribers (A, BK),
**characterised in**
**that** a predeterminable number of addresses can be associated with the second subscriber (BK) by a switching unit (TR) before the link is established,
**that** the switching unit (TR) is formed to establish the link and
**that** the second subscriber (BK) is trained to use at least one of the allocated addresses when establishing the link.

## Revendications

1. Procédé pour l'établissement d'une liaison de télécommunication entre un premier et un second participants (A, BK) dans un réseau de télécommunication, en particulier entre deux appareils adaptés à la communication, des adresses pouvant être adjointes aux participants (A, BK),
**caractérisé par le fait**
**qu'**un nombre d'adresses pouvant être prédéfinies est attribué par une unité de communication (TR) au second participant (BK) avant l'établissement de la liaison,
**que** l'établissement de la liaison est communiqué par l'unité de communication (TR) et
**que** le second participant (BK) utilise au moins l'une des adresses attribuées lors de l'établissement de la liaison.

2. Procédé selon la revendication 1,
**caractérisé par le fait que** les adresses sont rendues anonymes et/ou que les adresses sont administrées par l'unité de communication (TR).

3. Procédé selon la revendication 1 ou 2,
**caractérisé par le fait que** les adresses sont des adresses de Routing ou locales ou que les adresses sont des adresses IP ou Ethernet.

4. Procédé selon l'une des revendications 1 à 3,
**caractérisé par le fait que** le second utilisateur (BK) utilise au moins un mélange d'adresses de Routing et locales.

5. Procédé selon l'une des revendications 1 à 4,
**caractérisé par le fait qu'**on utilise en tant qu'unité de communication (TR) un noeud de réseau du réseau de télécommunication ou que le fonctionnement de l'unité de communication (TR) est réparti sur plusieurs noeuds de réseau du réseau de télécommunication.

6. Procédé selon l'une des revendications 1 à 5,
**caractérisé par** le fait de que le second participant (BK) parcourt une étape d'initialisation avant l'établissement de la liaison.

7. Procédé selon la revendication 6,
**caractérisé par le fait que**, pour le second participant (BK), dans le cadre de l'étape d'initialisation, les fonctions, paramètres, software, firmware ou hardware nécessaires pour une communication ou la réalisation d'une fonction cryptologique entre le second participant (BK) et l'unité de communication (TR) sont installés.

8. Procédé selon la revendication 7,
**caractérisé par le fait que** les fonctions, paramètres, software, firmware ou hardware sont installés par l'unité de communication (TR).

9. Procédé selon l'une des revendications 6 à 8,
**caractérisé par le fait qu'**une adresse initiale pour au moins un type d'adresses est communiquée au second utilisateur (BK) par l'unité de communication (TR) dans le cadre de l'étape d'initialisation avant l'établissement de la liaison et/ou que l'unité de communication (TR) effectue la communication des adresses au second participant (BK) dans le cadre de l'étape d'initialisation.

10. Procédé selon l'une des revendications 7 à 9,
**caractérisé par le fait qu'**au moins des parties des paramètres, software ou firmware sont installées sur un composant de hardware.

11. Procédé selon la revendication 9,
**caractérisé par le fait que** le composant de hardware communique avec le second participant (BK) sur un interface pouvant être défini ou qu'une carte IC est utilisée en tant que composant de hardware.

12. Procédé selon l'une des revendications 1 à 10,
**caractérisé par le fait que** le second participant (BK) élimine de l'attribution l'adresse utilisée ou les adresses utilisées ou que le second participant (BK) demande de nouvelles adresses à l'unité de communication (TR), aussitôt que le nombre des adresses se trouvant à disposition pour le second participant (BK) est épuisé ou est resté inférieur à une quantité pouvant être prédéfinie.

13. Procédé selon la revendication 12,
**caractérisé par le fait que** la quantité est prédéfinie par l'unité de communication (TR).

14. Procédé selon l'une des revendications 1 à 13,
**caractérisé par le fait que** l'attribution des adresses a lieu dans le cadre d'une liaison sécurisée ou que le second participant (BK) change l'adresse utilisée ou les adresses utilisées dans le cadre de son activation.

15. Procédé selon l'une des revendications 1 à 14,
**caractérisé par le fait que** le second participant (BK) change l'adresse utilisée ou les adresses utilisées après la fin de la liaison ou que le second participant (BK) change l'adresse utilisée ou les adresses utilisées dans le cadre du passage de l'état lié à l'état non lié ou que le second participant (BK) change l'adresse utilisée ou les adresses utilisées après un intervalle de temps pouvant être prédéfini.

16. Procédé selon la revendication 14 ou 15,
**caractérisé par le fait que** le second participant (BK) passe à l'état non lié - avant le changement - dans le cadre du changement de l'adresse ou des adresses utilisées après un intervalle de temps pouvant être prédéfini.

17. Procédé selon l'une des revendications 1 à 16,
**caractérisé par le fait que** le second participant (BK) utilise simultanément, dans le cadre de la liaison, plusieurs adresses ou mélanges d'adresses ou que le second participant (BK) et l'unité de communication (TR) s'identifient ou s'authentifient réciproquement dans le cadre d'une relation de communication.

18. Procédé selon l'une des revendications 1 à 17,
**caractérisé par le fait que** le premier participant (A) envoie, pour l'établissement de la liaison au second participant (BK), une adresse publique du second participant (BK) dans le réseau de télécommunication.

19. Procédé selon la revendication 18,
**caractérisé par le fait que** l'unité de communication (TR) transforme l'adresse publique en une adresse de Routing.

20. Procédé selon l'une des revendications 1 à 19,
**caractérisé par** le faîte que l'unité de communication (TR) informe le second participant (BK) d'un voeu du premier participant (A) pour l'établissement de la liaison.

21. Procédé selon l'une des revendications 1 à 20,
**caractérisé par le fait que** l'unité de communication (TR) envoie au second participant (BK) une adresse de Routing ou une adresse publique du premier participant (A) ou que - après consentement du second participant (BK) - l'unité de communication (TR) envoie au premier participant (A) une adresse de Routing du second participant (BK).

22. Procédé selon la revendication 21,
**caractérisé par le fait que** l'adresse de Routing envoyée du second participant (BK) est spécifiée avec l'unité de communication (TR).

23. Procédé selon la revendication 21 ou 22,
**caractérisé par le fait que** le premier participant (A) établit une liaison vers le second participant (BK) sur la base de l'adresse de Routing envoyée du second participant (BK).

24. Procédé selon l'une des revendications 1 à 23,
**caractérisé par le fait que** le second participant (BK) établit une liaison vers le premier participant (A) et/ou que le premier et le second participants (A, BK) s'authentifient.

25. Procédé selon l'une des revendications 1 à 24,
**caractérisé par le fait que** l'unité de communication (TR) envoie des paramètres d'authentification au premier et/ou au second participants (A, BK).

26. Procédé selon l'une des revendications 1 à 25,
**caractérisé par le fait que** des pas individuels de communication entre l'unité de communication (TR) et le premier ou le second participant (A, BK) ou entre le premier et le second participants (A, BK) se produisent désaccouplés chronologiquement ou de manière causale ou que des pas de communication individuels entre l'unité de communication (TR) et le premier ou le second participant (A, BK) ou entre le premier et le second participants (A, BK) sont doublés par des temporisations, des permutations ou des transactions préalablement échangées.

27. Procédé selon la revendication 26,
**caractérisé par le fait que** les désaccouplements chronologiques ou causals ou
les temporisations, les permutations ou les transactions préalablement échangées ont lieu par l'unité de communication (TR) ou par le premier ou le second participant (A, BK).

28. Procédé selon l'une des revendications 1 à 27,
**caractérisé par le fait que** l'unité de communication (TR) ou le second participant (BK) bloque le premier participant (A) pour des tentatives d'établissement de liaison supplémentaires au cas où une tentative précédente d'établissement de liaison a déjà été refusée par l'unité de communication (TR) ou le second participant (BK).

29. Procédé selon la revendication 28,
**caractérisé par le fait que** le blocage a lieu de manière illimitée dans le temps ou durablement.

30. Procédé selon l'une des revendications 1 à 29,
**caractérisé par le fait que** des tentatives d'établissement de liaison par des participants non autorisés sont bloquées de manière limitée dans le temps ou durablement.

31. Procédé selon l'une des revendications 1 à 30,
**caractérisé par le fait qu'**un ou plusieurs participants présentent des fonctions de relais ou bien qu'un nombre de participants pouvant être prédéfini échange des adresses d'identité codées.

32. Procédé selon l'une des revendications 1 à 31,
**caractérisé par le fait que**, par l'unité de communication (TR), une exploitation est effectuée depuis au moins un Gateway vers au moins un réseau partiel.

33. Procédé selon la revendication 32,
**caractérisé par le fait qu'**au moins un participant du réseau partiel pouvant être prédéfini utilise une adresse topologique.

34. Procédé selon la revendication 33,
**caractérisé par le fait que** le au moins un participant du réseau partiel pouvant être prédéfini effectue au moins un changement de coordonnées et/ou que l'adresse topologique est continuellement transmise codée.

35. Procédé selon la revendication 33 ou 34,
**caractérisé par le fait qu'**au moins un participant pouvant être prédéfini utilise un module de sécurité pour le décodage de l'adresse topologique codée.

36. Procédé selon l'une des revendications 1 à 35,
**caractérisé par le fait que** le fonctionnement d'un ou plusieurs participants est effectué par au moins un noeud de réseau, au moins un module ou au moins un dispositif d'un ou plusieurs noeuds de réseau.

37. Réseau de télécommunication, en particulier pour la mise en oeuvre du procédé selon l'une des revendications 1 à 36, pour l'établissement d'une liaison de télécommunication entre un premier et un second participants (A, BK), en particulier entre deux appareils adaptés pour la communication, des adresses pouvant être adjointes aux participants (A, BK),
**caractérisé par le fait**
**qu'**un nombre d'adresses pouvant être prédéfini peut être adjoint au second participant (BK), avant l'établissement de la liaison, par une unité de communication (TR),
**que** l'unité de communication (TR) est conformée pour l'établissement de la liaison et
**que** le second participant (BK) est conformé pour l'utilisation d'au moins l'une des adresses attribuées lors de l'établissement de la liaison.
